# EUROPÄISCHE PATENTANMELDUNG

(11) **EP 4 586 550 A1**
(43) Veröffentlichungstag der Anmeldung: **16.07.2025**
(21) Anmeldenummer: 24151627.7
(22) Anmeldetag: 12.01.2024
(51) Int. Cl.: H04L 9/40, H04W 4/02, H04W 4/40

(54) **VERFAHREN ZUM PLATZIEREN VON HONEYPOTS IN EINEM FAHRZEUGFLOTTENNETZWERK**

(71) Anmelder: Robert Bosch GmbH, 70442 Stuttgart (DE)
(72) Erfinder: Ilg, Niclas, 72119 Ammerbuch (DE); Huth, Christopher, 74076 Heilbronn (DE); Sisejkovic, Dominik, 13089 Berlin (DE)

(57) **Zusammenfassung**

Gemäß verschiedenen Ausführungsformen wird ein Verfahren zum Platzieren von Honeypots in einem Fahrzeugflottennetzwerk beschrieben, aufweisend Ermitteln einer Honeypot-Platzierung, die eine Platzierung von Honeypots auf mehreren Fahrzeugen einer Fahrzeugflotte angibt, Implementieren und Betreiben von Honeypots gemäß der Honeypot-Platzierung, Empfangen von Informationen über mindestens einen Angriff, Ermitteln einer Bewertung der Honeypot-Platzierung, wobei die Ermittlung der Bewertung beinhaltet, dass die Detektionswahrscheinlichkeit, dass der mindestens eine Angriff durch die Honeypot-Platzierung durch einen der Honeypots detektiert werden würde, bewertet wird, und Beibehalten oder Abändern der Honeypot-Platzierung dahingehend, auf welchen der Fahrzeuge Honeypots implementiert und betrieben werden, abhängig von der Bewertung.

## Beschreibung

Die vorliegende Offenbarung bezieht sich auf Verfahren zum Platzieren von Honeypots in einem Fahrzeugflottennetzwerk.

Die Anzahl von vernetzten Datenverarbeitungsvorrichtungen (inklusive eingebetteter Geräte) steigt rapide an. Ein wichtiger Aspekt all dieser Geräte - seien es Server-Computer im Internet oder Steuereinrichtungen im Automobil- oder im I-oT-Bereich - ist die Produktsicherheit. Honeypots sind Attrappen, die ein solches wertvolles (Ziel-)System imitieren, um Angreifer anzulocken und Informationen über deren Angriffsstrategien und -ziele zu gewinnen. Vor allem in der Unternehmens-IT sind Honeypots ein etabliertes Tool zur Bedrohungsanalyse und sie werden inzwischen auch im Bereich des (Industrial) Internet of Things ((I)IoT) eingesetzt.

In einem Netzwerk von Datenverarbeitungsvorrichtungen stellt sich neben der Konfiguration der einzelnen Honeypots auch die Frage, wie die Honeypots in dem Netzwerk zu verteilen sind, d.h. auf welchen der Datenverarbeitungsvorrichtungen Honeypots implementiert werden sollten, um einen möglichst großen Nutzen zu haben. Diese Frage stellt sich insbesondere dann, wenn die Datenverarbeitungsvorrichtungen mobil sind, z.B. Datenverarbeitungsvorrichtungen sind, die in Fahrzeuge eingebaut sind, d.h. das Netzwerk ein Fahrzeugflottennetzwerk ist.

Es sind deshalb effektive Herangehensweisen für das Platzieren von Honeypots auf einen Fahrzeugflottennetzwerk wünschenswert.

Gemäß verschiedenen Ausführungsformen wird ein Verfahren zum Platzieren von Honeypots in einem Fahrzeugflottennetzwerk bereitgestellt, aufweisend Ermitteln einer Honeypot-Platzierung, die eine Platzierung von Honeypots auf mehreren Fahrzeugen einer Fahrzeugflotte angibt, Implementieren und Betreiben von Honeypots gemäß der Honeypot-Platzierung, Empfangen von Informationen über mindestens einen Angriff, Ermitteln einer Bewertung der Honeypot-Platzierung, wobei die Ermittlung der Bewertung beinhaltet, dass die Detektionswahrscheinlichkeit, dass der mindestens eine Angriff durch die Honeypot-Platzierung durch einen der Honeypots detektiert werden würde, bewertet wird, und Beibehalten oder Abändern der Honeypot-Platzierung dahingehend, auf welchen der Fahrzeuge Honeypots implementiert und betrieben werden, abhängig von der Bewertung.

Das oben beschriebene Verfahren ermöglicht einen selbstverbessernden Einsatz von Honeypots in Fahrzeugflotten. Das Empfangen von Informationen über Angriffe, das Überprüfen und ggf. Ändern der Honeypot-Platzierung kann wiederholt durchgeführt werden, sodass die Honeypot-Platzierung iterativ verbessert und/oder angepasst wird.

Im Folgenden werden verschiedene Ausführungsbeispiele angegeben.

Ausführungsbeispiel 1 ist ein Verfahren zum Platzieren von Honeypots in einem Fahrzeugflottennetzwerk, wie oben beschrieben.

Ausführungsbeispiel 2 ist ein Verfahren nach Ausführungsbeispiel 1, aufweisend, in Reaktion darauf, dass die Detektionswahrscheinlichkeit unter einem vorgegebenen Schwellwert liegt, Aktualisieren der Honeypot-Platzierung zu einer aktualisierten Honeypot-Platzierung mit erhöhter Detektionswahrscheinlichkeit für den mindestens einen Angriff.

Beispielsweise kann für bekannt gewordene Angriffe die Platzierung der Honeypots geändert werden oder auch Honeypots hinzugefügt werden, um die bekannt gewordenen Angriffe (mit gewisser Wahrscheinlichkeit) detektieren zu können.

Ausführungsbeispiel 3 ist ein Verfahren nach Ausführungsbeispiel 1 oder 2, ferner aufweisend Empfangen von Betriebsinformationen des Fahrzeugflottennetzwerks, wobei die Bewertung der Honeypot-Platzierung auf der Grundlage der Betriebsinformationen ermittelt wird.

Insbesondere können die Betriebsinformationen bei der Ermittlung der Detektionswahrscheinlichkeit berücksichtigt werden. Beispielsweise wird berücksichtigt, wie viele Netzwerk-Hops die Honeypots voneinander entfernt sind und dann abgeschätzt, ob der Angriff detektiert werden würde (z.B. mit einer bestimmten Wahrscheinlichkeit). Die Betriebsinformationen können aber auch anders in die Bewertung eingehen, wodurch die die Optimierung der Honeypot-Platzierung verbessert werden kann.

Ausführungsbeispiel 4 ist ein Verfahren nach Ausführungsbeispiel 3, wobei die Betriebsinformation einer oder mehrerer von Informationen über von den Honeypots erfassten Angriffen (auf das Fahrzeugflottennetzwerk), Informationen über das Interesse von Angreifer an den Honeypots, Informationen über die Ähnlichkeit der Honeypots (z.B. hinsichtlich angebotener Dienste etc.) mit anderen durch die Fahrzeugen implementierten Netzwerkknoten (des Fahrzeugflottennetzwerks) und Informationen über den Abstand den Honeypots hinsichtlich Netzwerk-Hops enthalten.

Der Zustand des Fahrzeugflottennetzwerks, wie er sich in diesen Betriebsinformationen widerspiegelt, kann sich im Laufe der Zeit ändern, sodass durch die Berücksichtigung dieser Betriebsinformationen bei der Entscheidung, ob (und wenn ja wie) die Honeypot-Platzierung geändert wird, sichergestellt werden kann, dass die Honeypot-Platzierung über einen längeren Zeitraum hinweg gut geeignet bleibt, um Angriffe zu detektieren (insbesondere das Interesse von Angreifern zu erwecken und aufrechtzuerhalten). So wird (insbesondere durch die Berücksichtigung der Information über die von den Honeypots erfassten Angriffen und die Information über das Interesse von Angreifer an den Honeypots bei der Ermittlung der Bewertung) die Eignung der Honeypot-Platzierung gemessen und auf dieser Grundlage die Platzierung ggf. so verbessert, dass sie für echte Angreifer attraktiver wird. So kann automatisch eine Honeypot-Platzierung mit guter Attraktivität (für Angreifer) gefunden werden. Es kann also automatisch der Standort von Honeypots in einer Fahrzeugflotte verbessert werden in Hinblick darauf, dass die Honeypots (in ihrer Gesamtheit) für Angreifer möglichst attraktiv sind. So kann automatisch eine Honeypot-Platzierung zur Maximierung des Interesses und der Aufmerksamkeit von Angreifern anhand von echtem Angriffsfeedback (z.B. Messung der Investitionen von Angreifern in Honeypots anhand von Daten aus der realen Welt) gefunden werden.

Ausführungsbeispiel 5 ist ein Verfahren nach einem der Ausführungsbeispiele 1 bis 4, wobei das Beibehalten oder Abändern der Honeypot-Platzierung dahingehend, auf welchen der Fahrzeuge Honeypots implementiert und betrieben werden, abhängig von der Bewertung das Suchen nach einer anderen Honeypot-Platzierung mit höherer Bewertung und Ändern der Honeypot-Platzierung zu der anderen Honeypot-Platzierung aufweist, wenn eine solche gefunden wird.

Hierfür können verschiedene Ansätze verwendet werden, insbesondere in Hinblick darauf, welche Informationen und Metriken in die Bewertung eingehen. Es kann hierbei Expertenwissen herangezogen werden oder es können zufällige Änderungen (Mutationen) der Honeypot-Platzierung getestet (d.h. ihre entsprechende Bewertung geschätzt oder auch durch tatsächlichen (testweisen) Einsatz ermittelt werden).

Ausführungsbeispiel 6 ist eine Fahrzeugflottennetzwerk-Steuerungseinrichtung, eingerichtet zum Durchführen des Verfahrens nach einem der Ausführungsbeispiele 1 bis 5.

Ausführungsbeispiel 7 ist ein Computerprogramm mit Befehlen, die, wenn sie durch einen Prozessor ausgeführt werden, bewirken, dass der Prozessor ein Verfahren nach einem der Ausführungsbeispiele 1 bis 5 durchführt.

Ausführungsbeispiel 8 ist ein computerlesbares Medium, das Befehle speichert, die, wenn sie durch einen Prozessor ausgeführt werden, bewirken, dass der Prozessor ein Verfahren nach einem der Ausführungsbeispiele 1 bis 5 durchführt.

In den Zeichnungen beziehen sich ähnliche Bezugszeichen im Allgemeinen auf dieselben Teile in den ganzen verschiedenen Ansichten. Die Zeichnungen sind nicht notwendigerweise maßstäblich, wobei die Betonung stattdessen im Allgemeinen auf die Darstellung der Prinzipien der Erfindung gelegt wird. In der folgenden Beschreibung werden verschiedene Aspekte mit Bezug auf die folgenden Zeichnungen beschrieben.
- Figur 1: zeigt ein Computernetzwerk.
- Figur 2: veranschaulicht die Platzierung von Honeypots in einem Fahrzeugflottennetzwerk gemäß einer Ausführungsform.
- Figur 3: zeigt ein Ablaufdiagramm, das ein Verfahren zum Erzeugen eines Honeypots gemäß einer Ausführungsform darstellt.

Die folgende ausführliche Beschreibung bezieht sich auf die begleitenden Zeichnungen, die zur Erläuterung spezielle Details und Aspekte dieser Offenbarung zeigen, in denen die Erfindung ausgeführt werden kann. Andere Aspekte können verwendet werden und strukturelle, logische und elektrische Änderungen können durchgeführt werden, ohne vom Schutzbereich der Erfindung abzuweichen. Die verschiedenen Aspekte dieser Offenbarung schließen sich nicht notwendigerweise gegenseitig aus, da einige Aspekte dieser Offenbarung mit einem oder mehreren anderen Aspekten dieser Offenbarung kombiniert werden können, um neue Aspekte zu bilden.

Im Folgenden werden verschiedene Beispiele genauer beschrieben.

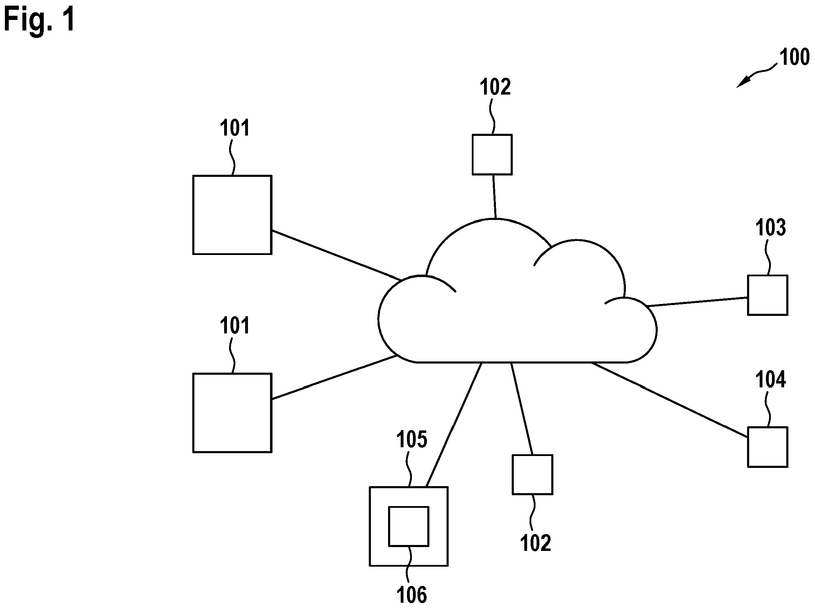

Figur 1 zeigt ein Computernetzwerk 100. Das Computernetzwerk 100 enthält eine Vielzahl von Datenverarbeitungsvorrichtungen 101-105, die durch Kommunikationsverbindungen miteinander verbunden sind. Die Datenverarbeitungsvorrichtungen 101-105 beinhalten z.B. Server-Computer 101 und Steuergeräte 102 sowie und Benutzerendgeräte 103, 104.

Server-Computer 101 stellen verschiedene Dienste zur Verfügung, wie Internet-Seiten, Bankingportale etc. Ein Steuergerät 102 ist z.B. eine Steuereinrichtung für eine Robotervorrichtung wie z.B. eine Steuereinrichtung in einem autonomen Fahrzeug. Die Server-Computer 101 und Steuergeräte 102 erfüllen also verschiedene Aufgaben und typischerweise kann von einem Benutzerendgerät 103, 104 auf einen Server-Computer 101 oder ein Steuergerät 102 zugegriffen werden. Dies ist insbesondere dann der Fall, wenn ein Server-Computer 101 einem Benutzer eine Funktionalität anbietet, wie z.B. ein Banking-Portal. Aber auch ein Steuergerät 102 kann den Zugriff von außerhalb ermöglichen (z.B. damit es konfiguriert werden kann). Je nach Aufgabe eines Server-Computers 101 oder Steuergeräts 102 können diese sicherheitsrelevante Daten speichern und sicherheitsrelevante Aufgaben ausführen. Dementsprechend müssen sie gegen Angreifer geschützt werden. Beispielsweise könnte ein Angreifer, der eines der Benutzerendgeräte 104 verwendet, durch einen erfolgreichen Angriff geheime Daten (wie z.B. Schlüssel) in seinen Besitz bekommen, Konten manipulieren oder auch ein Steuergerät 102 so manipulieren, dass es zu einem Unfall kommt.

Eine Sicherheitsmaßnahme gegenüber solchen Angriffen ist ein sogenannter Honeypot 106 (der von einer der Datenverarbeitungsvorrichtungen 105 implementiert wird). Er stellt vermeintlich eine Funktionalität bereit und dient so als Köder, um potenzielle Angreifer anzulocken. Dabei wird er aber von geheimen Informationen oder kritischer Funktionalität isoliert, so dass Angriffe auf ihn in einer kontrollierten Umgebung erfolgen und das Risiko einer Beeinträchtigung der eigentlichen Funktionalität minimiert wird. So ermöglicht er, Kenntnisse über Angriffe auf ein Zielsystem (z.B. einen der Server-Computer 101 oder eines der Steuergeräte 102) - und damit die Bedrohungslandschaft - zu gewinnen, auf die durch die Implementierung mit geeigneten Maßnahmen auf dem Zielsystem reagiert werden kann, ohne dass diese Angriffe das Zielsystem gefährden.

Ein Honeypot ist also ein Täuschungssystem, das ein Zielsystem (auch als "wertvolles Ziel" bezeichnet) imitiert. Er verleitet Angreifer dazu, den Honeypot anzugreifen und Angriffsvektoren zu enthüllen, die auf das echte wertvolle Ziel abzielen. So ist beispielsweise ein Webserver (bzw. die Webserver-Software) eine beliebte Option, die von einem Honeypot nachgeahmt wird. Da Webserver einen großen Teil des öffentlichen Internets ausmachen, ist es wichtig, Bedrohungen, die auf sie abzielen, kontinuierlich zu überwachen.

Vor allem für die Automobilindustrie sind Honeypots interessant, da es kaum Daten über echte Angriffe gibt. Gemäß verschiedenen Ausführungsformen können also die Datenverarbeitungsvorrichtung 105, die den Honeypot 106 implementiert, und die anderen der Datenverarbeitungsvorrichtungen 101-104 also beispielsweise in Fahrzeugen implementiert werden. Das Computernetzwerk 100 ist (oder beinhaltet) dann also ein Fahrzeugflottennetzwerk (z.B. ein Internet of Vehicles IoV), d.h. ein Netzwerk von (miteinander über Kommunikationsverbindungen verbundene) Datenverarbeitungsvorrichtungen, die in einer Vielzahl von Fahrzeugen angeordnet sind.

Ein Honeypot soll echte Angreifer anlocken (d.h. für Angreifer attraktiv sein) und das Interesse eines angelockten Angreifers am Honeypot (d.h. ihre Attraktivität) möglichst gut aufrecht zu erhalten, um so viel wie möglich von dem Angreifer zu lernen. Für Letzteres kann ein Honeypot so konfiguriert werden, dass er Schwachstellen aufweist (oder zumindest nachahmt), sodass ein Angreifer versucht, diese auszunutzen. Dafür kann beispielsweise mittels des Common Vulnerability Scoring System (CVSS), das den Schweregrad von Common Vulnerabilities and Exposures (CVE) bewertet, verwendet werden, um die Zeit, die ein Angreifer auf dem System verbringt, und die Erkenntnisse, die ein Verteidiger durch den Angriff gewinnt, abzuschätzen. Dies liefert aber noch keine Information über ein effektive Platzierung von Honeypots in einem Fahrzeugflottennetzwerk.

Gemäß verschiedenen Ausführungsformen wird deshalb eine Herangehensweise bereitgestellt, die eine effektive automatische Platzierung von Honeypots in einer Fahrzeugflotte und die (z.B. iterative) Verbesserung dieser Platzierung ermöglicht.

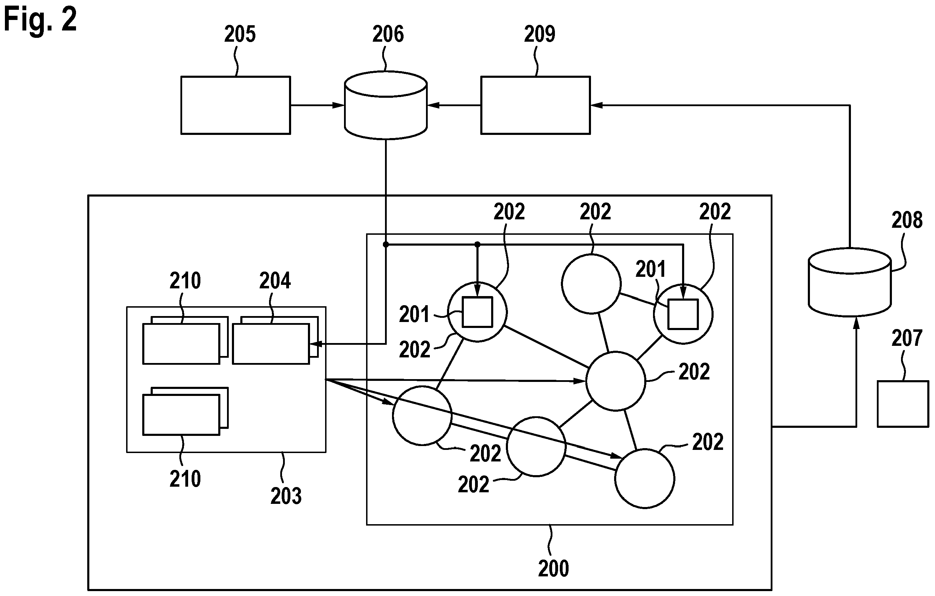

Figur 2 veranschaulicht die Platzierung von Honeypots 201 in einem Fahrzeugflottennetzwerk 200 gemäß einer Ausführungsform.

Die Ermittlung der Honeypot-Platzierung (und ggf. auch die Auswahl einer Architektur für die Honeypots 201 und deren Konfiguration) erfolgt durch eine Honeypot-Erzeugungseinrichtung (oder Honeypot-Konfigurationseinrichtung), die beispielsweise einem der Benutzerendgeräte 104 entspricht (z.B. einem Computer, mit dem ein Benutzer (wie z.B. ein Systemadministrator), die Honeypots 201 konfiguriert und die jeweiligen Fahrzeuge 202 instruiert, die jeweiligen Honeypots 201 bereitzustellen). Die Honeypot-Erzeugungseinrichtung ist beispielsweise teil eines Flottenmanagementsystems 203. Die hierin beschriebenen Verfahren zur Erzeugung eines Honeypots werden also beispielsweise von solch einer Honeypot-Erzeugungseinrichtung oder einer Fahrzeugflottennetzwerk-Steuerungseinrichtung, die eine solche Honeypot-Erzeugungseinrichtung enthält oder steuert (beispielsweise automatisch), durchgeführt.

Zu Beginn wird mindestens ein Honeypot 201 in dem Fahrzeugflottennetzwerk 200 und beispielsweise auch ein oder mehrere Honeypot 204 im Flottenmanagementsystem 203 als eine von mehreren Anwendungen ("Apps") 210, die auf dem Flottenmanagementsystem 203 laufen und seine Funktionalität implementieren, platziert.

Die anfängliche Anzahl der Honeypots 201 kann je nach Platzierungsstrategie und Flottengröße variieren. Für die anfängliche Platzierung 205 gibt es verschiedene Alternativen, wobei auch einfach eine zufällige Platzierung verwendet werden kann. Eine andere anfängliche Platzierung kann auch darin bestehen, Honeypots 201 an zentralen Knoten (d.h. Fahrzeugen), d. h. mit den meisten Verbindungen, oder an physischen Orten mit einer guten drahtlosen Verbindung, wie GSM, oder an physischen Orten mit hohem Internetverkehr, z.B. in Städten, zu platzieren. Die Honeypot-Platzierung (auch als "Platzierungskonfiguration" bezeichnet, was auch Konfigurationsinformation über die einzelnen Honeypots 201 enthalten kann) wird in einer Datenbank 206 gespeichert.

Abhängig von der Platzierungsstrategie und/oder der (aktuellen) Platzierungskonfiguration werden die Standorte der Honeypots 201 (d.h. in welchen Fahrzeugen 202 sie implementiert sind) aktualisiert. Dies kann in regelmäßigen Abständen geschehen, z. B. durch tägliche Aktualisierung aller Honeypots 201, oder kontinuierlich, z. B. durch Aktualisierung (d.h. Ändern der Konfiguration) eines einzelnen Honeypots 201.

Es wird kontinuierlich Feedback 207 über den Betrieb der Honeypots 201 gesammelt und in einer Protokolldatenbank 208 gespeichert. Die Protokolle (engl. "Logs") enthalten z.B. Zeitstempel von Angriffen auf die Honeypots 201 und die Dauer der Angriffe. Aus einer globalen Sicht kann auch gesehen werden, welche Teile der Flotte 200 von Angreifern gescannt wurden, z. B. durch Port-Scans. Da das Ziel des Verteidigers ein sicheres Fahrzeugflottennetzwerk ist, ist die Zahl der erwarteten Angreifer, die echte Angriffe durchführen, sehr gering. Aus diesem Grund umfasst das Feedback mehrere Arten von Informationen (insbesondere Metriken), so dass auch ohne oder nur bei wenigen Angriffe auf das Fahrzeugflottennetzwerk 200 selbst nützliches Feedback 207 für die Optimierung der Honeypot-Platzierung erzeugt werden kann:
- Angriffe auf das Fahrzeugflottennetzwerk 200: Die Entdeckung durch die Honeypots 201 echter Angriffe auf das Fahrzeugflottennetzwerk 200 selbst ist eine wichtige Kennzahl, da sie zeigt, dass ein positionierter Honeypot 201 einen Angreifer erfolgreich angelockt hat. Dieses Feedback kann auch Informationen über die Dauer, die Angreifer sich mit den Honeypots 201 jeweils beschäftigt haben beinhalten: Je mehr Datenverkehr ein Honeypot generiert und je länger ein Angreifer mit einem Honeypot beschäftigt ist, desto besser ist er geeignet.
- Fingerabdruck-Delta: Das Fingerabdruck-Delta zeigt die Ähnlichkeit zwischen einem Honeypot und den Netzwerkknoten (Fahrzeug in der Flotte oder Anwendungen im Flottenmanagement) in unmittelbarer Nähe. Mögliche Inhalte eines Fingerabdrucks sind angebotene Netzwerkdienste, Knotenbezeichnungen oder Knotendaten (z.B. Telemetriedaten). Durch Berücksichtigung dieser Information kann sichergestellt werden, dass ein 201 Honeypot wird also in einer Umgebung von ähnlich aussehenden Systemen (was netzwerktopologisch verstanden werden kann, also z.B. in demselben Teilnetz wie Systeme mit ähnlichem Fingerprint) platziert wird (und dadurch für einen Angreifer glaubwürdig ist). Der Grundgedanke ist z. B., dass ein Honeypot für einen Lieferwagen besser in einer (Teil-)Flotte von Lieferwagen platziert werden sollte als in einer (Teil-)Flotte von Testfahrzeugen.
- Anzahl der Netzwerk-Hops: Um eine sinnvolle Abdeckung des Fahrzeugflottennetzwerks gewährleisten zu können, wird die (z.B. maximale und/oder mittlere maximale) Anzahl der Netzwerk-Hops zwischen den Honeypots 201 im Verhältnis zur Größe des gesamten Fahrzeugflottennetzwerks 200 ermittelt. Durch Berücksichtigung dieser Information kann sichergestellt werden, dass das Fahrzeugflottennetzwerk 200 mit einer angemessenen Anzahl von Honeypots abgedeckt wird.
- Bewertung der Relevanz der Honeypot-Platzierung für "die reale Welt", d.h. auf der Grundlage von Angriffen auf andere Netzwerke (insbesondere andere Fahrzeugflottennetzwerke): Informationen über Angriffe (d.h. insbesondere Angriffspfade) von anderen Netzwerken werden verwendet, um die Honeypot-Platzierung zu bewerten. Wenn der Angriffspfad zur Ausnutzung einer Schwachstelle eines Fahrzeugs bekannt wird (durch Feedback von anderen Netzwerken, insbesondere anderen Fahrzeugflottennetzwerke), wird beispielsweise ermittelt, ob die Honeypot-Platzierung diesen Angriff detektieren könnte (wobei diese Ermittlung die anderen Teile des Feedbacks, insbesondere Betriebsinformationen wie die Netzwerk-Hops zwischen den Honeypots 201 dabei verwendet werden kann). Ist dies nicht der Fall, wird sie beispielsweise derart abgeändert, dass mindestens ein Honeypot 201 an einer Stelle platziert wird, die ein Angreifer nutzen muss, um den Angriffspfad zu replizieren. Allgemein gesprochen kann ein Bewerten der Detektionswahrscheinlichkeit für Angriffe erfolgen (wobei die Bewertung der Detektionswahrscheinlichkeit auch einfach "kann detektiert werden" oder "kann nicht detektiert werden" sein kann). Wird beispielsweise ein Angriff bekannt, der einen bestimmten Fahrzeugtyp betrifft, so wird die Honeypot-Platzierung beispielsweise dahingehend abgeändert, dass zumindest auf einem Teil dieser Fahrzeugtypen ein Honeypot platziert wird. Beim "Jeep Hacks" von 2015 haben sich beispielsweise zwei Forscher Zugang zu einem privaten Teil eines Mobilfunknetzwerks verschafft und im Anschluss nach Jeep-Fahrzeugen gesucht, die auf ihrer Infotainment-Einheit einen bestimmten verwundbaren Dienst laufen hatten. Wird ein solcher Angriff gekannt, könnte zum Beispiel überprüft werden, ob die Honeypot-Platzierung
   1. einen Honeypot auf mindestens einem Jeep Fahrzeug enthält
   2. einen Honeypot enthält, der eine Infotainment Einheit nachahmt
   3. einen Honeypot enthält, der das jeweilige Betriebssystem (in diesem Beispiel QNX) nachahmt
   4. einen Honeypot enthält, der das jeweilige Betriebssystem (in diesem Beispiel QNX) und den betroffenen Dienst nachahmt
   Die Bewertung der Honeypot-Platzierung nimmt hierbei von 1 bis 4 zu, d.h. die Bewertung wäre für den Fall, dass die Honeypot-Platzierung einen Honeypot enthält, der das jeweilige Betriebssystem und den betroffenen Dienst nachahmt am höchsten, da er direkt die betroffene Einheit nachahmt und vermutlich von jedem Angreifer, der den gleichen Angriff ausführen möchte, untersucht werden würde. Ist überhaupt kein Honeypot nach 1 bis 4 vorhanden, kann die die Honeypot-Platzierung dahingehend geändert werden, das ein oder mehrere solche eingefügt werden oder es kann beispielsweise (je nach Anforderung), wenn die Honeypot-Platzierung nur einen Honeypot nach 3 enthält, ein Honeypot nach 4 eingefügt werden oder der Honeypot nach 3 entsprechend umkonfiguriert werden.

Basierend auf dem obigen Feedback (oder zumindest Teilen davon) und der aktuellen Platzierungskonfiguration wird automatisch die Eignung der aktuellen Honeypot-Platzierung bewertet, d.h. eine Bewertung 209 der aktuellen Honeypot-Platzierung ermittelt.

Die Honeypot-Platzierung wird dann (wenn möglich) angepasst, um die Bewertung zu erhöhen (z.B. falls sie unter einer bestimmten Schwelle liegt, insbesondere wenn bekannt gewordene Angriffe nicht oder nur mit geringer Wahrscheinlichkeit detektiert werden können). Beispielsweise wird nach möglichen Verbesserungen gesucht (z.B. eine geänderte Platzierung, wodurch neu bekannt gewordene Angriffe entdeckt werden könnten) und, wenn festgestellt wird, dass eine bestimmte Honeypot-Platzierung die Bewertung ("Gesamtfitness") verbessern könnte, wird die die Honeypot-Platzierung entsprechend aktualisiert. Diese Vorgehen (Sammeln von Feedback, Suchen nach möglichen Verbesserungen, Aktualisierung) wird beispielsweise iterativ wiederholt, bis eine vordefinierte Bewertung erreicht ist, wenn sich zeigt, dass sich die Bewertung nicht mehr erhöhen lässt (innerhalb der vorgegebenen Schranken, z.B. einer maximalen Anzahl von Honeypots oder dafür genutzter Ressourcen) oder wenn der Verbesserungszyklus durch eine Zeitüberschreitung oder eine manuelle Interaktion abgebrochen wird.

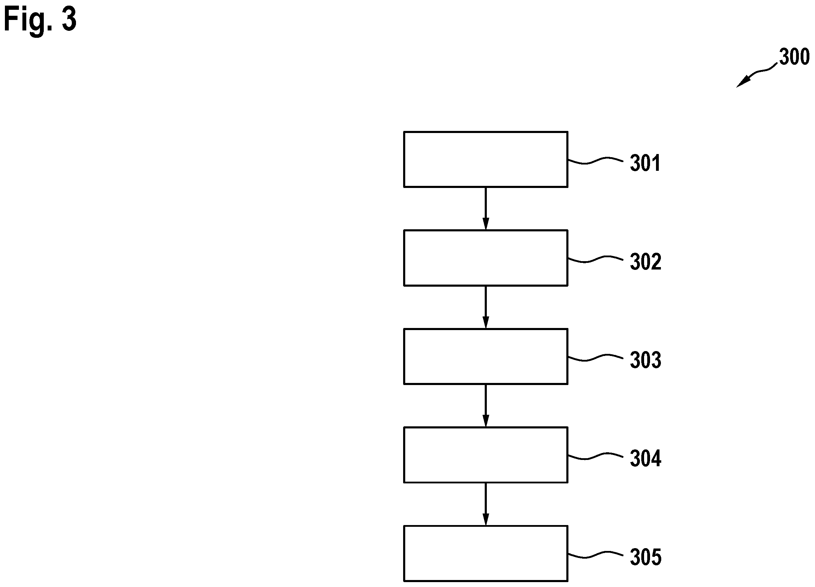

Zusammengefasst wird gemäß verschiedenen Ausführungsformen ein Verfahren bereitgestellt, wie in Figur 3 dargestellt.

Figur 3 zeigt ein Ablaufdiagramm 300, das ein Verfahren zum Erzeugen eines Honeypots gemäß einer Ausführungsform darstellt.

In 301 wird eine Honeypot-Platzierung, die eine Platzierung (und ggf. auch Konfiguration) von Honeypots auf mehreren Fahrzeugen einer Fahrzeugflotte (die ein Fahrzeugflottennetzwerk bilden) angibt (d.h. angibt, auf welchen der Fahrzeuge Honeypots zu implementieren und zu betreiben sind), ermittelt.

In 302 werden Honeypots gemäß der Honeypot-Platzierung (in dem Fahrzeugflottennetzwerk) implementiert und betrieben.

In 303 werden Informationen über mindestens einen Angriff empfangen.

In 304 wird eine Bewertung der Honeypot-Platzierung ermittelt, wobei die Ermittlung der Bewertung beinhaltet, dass die Detektionswahrscheinlichkeit, dass der mindestens eine Angriff durch die Honeypot-Platzierung durch einen der Honeypots detektiert werden würde, bewertet wird (d.h. eine Bewertung der Detektionswahrscheinlichkeit geht in die Bewertung der Honeypot-Platzierung ein, d.h. die Bewertung der Honeypot-Platzierung hängt von einer Bewertung der Detektionswahrscheinlichkeit ab).

In 305 wird die Honeypot-Platzierung dahingehend, auf welchen der Fahrzeuge Honeypots implementiert und betrieben werden, abhängig von der Bewertung abgeändert oder beibehalten.

Das Verfahren von Figur 3 kann durch einen oder mehrere Computer mit einer oder mehreren Datenverarbeitungseinheiten durchgeführt werden. Der Begriff "Datenverarbeitungseinheit" kann als irgendein Typ von Entität verstanden werden, die die Verarbeitung von Daten oder Signalen ermöglicht. Die Daten oder Signale können beispielsweise gemäß mindestens einer (d.h. einer oder mehr als einer) speziellen Funktion behandelt werden, die durch die Datenverarbeitungseinheit durchgeführt wird. Eine Datenverarbeitungseinheit kann eine analoge Schaltung, eine digitale Schaltung, eine Logikschaltung, einen Mikroprozessor, einen Mikrocontroller, eine Zentraleinheit (CPU), eine Graphikverarbeitungseinheit (GPU), einen Digitalsignalprozessor (DSP), eine integrierte Schaltung einer programmierbaren Gatteranordnung (FPGA) oder irgendeine Kombination davon umfassen oder aus dieser ausgebildet sein. Irgendeine andere Weise zum Implementieren der jeweiligen Funktionen, die hierin genauer beschrieben werden, kann auch als Datenverarbeitungseinheit oder Logikschaltungsanordnung verstanden werden. Es können ein oder mehrere der im Einzelnen hier beschriebenen Verfahrensschritte durch eine Datenverarbeitungseinheit durch eine oder mehrere spezielle Funktionen ausgeführt (z.B. implementiert) werden, die durch die Datenverarbeitungseinheit durchgeführt werden.

Das Verfahren ist also gemäß verschiedenen Ausführungen insbesondere computerimplementiert.

## Patentansprüche

1. Verfahren zum Platzieren von Honeypots (106, 201) in einem Fahrzeugflottennetzwerk (200), aufweisend:
Ermitteln (301) einer Honeypot-Platzierung (205), die eine Platzierung von Honeypots auf mehreren Fahrzeugen einer Fahrzeugflotte angibt;
Implementieren und Betreiben (302) von Honeypots (106, 201) gemäß der Honeypot-Platzierung (205);
Empfangen (303) von Informationen über mindestens einen Angriff;
Ermitteln (304) einer Bewertung (209) der Honeypot-Platzierung (205), wobei die Ermittlung der Bewertung (209) beinhaltet, dass die Detektionswahrscheinlichkeit, dass der mindestens eine Angriff durch die Honeypot-Platzierung (205) durch einen der Honeypots (106, 201) detektiert werden würde, bewertet wird; und
Beibehalten oder Abändern (305) der Honeypot-Platzierung (205) dahingehend, auf welchen der Fahrzeuge (202) Honeypots (106, 201) implementiert und betrieben werden, abhängig von der Bewertung (209).

2. Verfahren nach Anspruch 1, aufweisend, in Reaktion darauf, dass die Detektionswahrscheinlichkeit unter einem vorgegebenen Schwellwert liegt, Aktualisieren der Honeypot-Platzierung (205) zu einer aktualisierten Honeypot-Platzierung mit erhöhter Detektionswahrscheinlichkeit für den mindestens einen Angriff.

3. Verfahren nach Anspruch 1 oder 2, ferner aufweisend Empfangen von Betriebsinformationen des Fahrzeugflottennetzwerks (200), wobei die Bewertung (209) der Honeypot-Platzierung (205) auf der Grundlage der Betriebsinformationen ermittelt wird.

4. Verfahren nach Anspruch 3, wobei die Betriebsinformation einer oder mehrerer von Informationen über von den Honeypots (106, 201) erfassten Angriffen, Informationen über das Interesse von Angreifer an den Honeypots (106, 201), Informationen über die Ähnlichkeit der Honeypots (106, 201) mit anderen durch die Fahrzeugen (202) implementierten Netzwerkknoten und Informationen über den Abstand den Honeypots (106, 201) hinsichtlich Netzwerk-Hops enthalten.

5. Verfahren nach einem der Ansprüche 1 bis 4, wobei das Beibehalten oder Abändern der Honeypot-Platzierung (205) dahingehend, auf welchen der Fahrzeuge (202) Honeypots (106, 201) implementiert und betrieben werden, abhängig von der Bewertung (209) das Suchen nach einer anderen Honeypot-Platzierung mit höherer Bewertung und Ändern der Honeypot-Platzierung (205) zu der anderen Honeypot-Platzierung aufweist, wenn eine solche gefunden wird.

6. Fahrzeugflottennetzwerk-Steuerungseinrichtung (203), eingerichtet zum Durchführen des Verfahrens nach einem der Ansprüche 1 bis 5.

7. Computerprogramm mit Befehlen, die, wenn sie durch einen Prozessor ausgeführt werden, bewirken, dass der Prozessor ein Verfahren nach einem der Ansprüche 1 bis 5 durchführt.

8. Computerlesbares Medium, das Befehle speichert, die, wenn sie durch einen Prozessor ausgeführt werden, bewirken, dass der Prozessor ein Verfahren nach einem der Ansprüche 1 bis 5 durchführt.
